# FASCICULE DE BREVET EUROPEEN

(11) **EP 4 194 972 B1**
(45) Date de publication et mention de la délivrance du brevet: **26.02.2025**
(21) Numéro de dépôt: 22208233.1
(22) Date de dépôt: 18.11.2022
(51) Int. Cl.: G05B 15/02

(54) **SYSTÈME DE COMMANDE D'UNE PLURALITÉ D'APPAREILS DOMESTIQUES**
SYSTEM ZUR STEUERUNG EINER VIELZAHL VON HAUSHALTSGERÄTEN
SYSTEM FOR CONTROLLING A PLURALITY OF HOUSEHOLD APPLIANCES

(30) Priorité: 07.12.2021 FR 2113041
(43) Date de publication de la demande: 14.06.2023
(73) Titulaire: SEB S.A., 69130 Ecully (FR)
(72) Inventeur: PERINO, Yoann, 69134 Ecully Cedex (FR)
(74) Mandataire: Germain Maureau

(56) Documents cités:
- US-A1- 2015 331 666
- US-A1- 2019 086 890
- US-A1- 2020 313 923

## Description

### Domaine technique de l'invention

La présente invention concerne de manière générale le domaine des appareils domestiques, et en particulier le domaine des appareils domestiques, incluant des appareils électroménagers, pouvant former un réseau d'appareils qui peut proposer des services à un utilisateur.

### État de la technique

Dans l'art antérieur des appareils domestiques, on connaît par exemple le document JP2002091491A qui divulgue des appareils de cuisson qui peuvent être commandés par la voix de l'utilisateur. Cependant, les appareils de cuisson commandés ne proposent qu'un fonctionnement standard et aucun service enrichi n'est apporté à l'utilisateur. On connaît également les documents US 2019/086890 A1 qui divulgue un système d'appareils ménagers configuré pour fournir des services en fonction de l'identité de l'utilisateur et US 2015/331666 A1 qui divulgue le traitement des commandes dans un système vocal interactif.

### Exposé de l'invention

Un but de la présente invention est de répondre aux inconvénients de l'art antérieur mentionnés ci-dessus et en particulier, tout d'abord, de proposer un système de commande d'une pluralité d'appareils domestiques pouvant être commandés par la voix, et qui apportent un service enrichi à l'utilisateur par un fonctionnement particulier.

A cet effet, un premier aspect de l'invention se rapporte à un système de commande d'une pluralité d'appareils domestiques incluant par exemple des appareils électroménagers, comprenant :
- au moins une unité satellite, installée sur un premier appareil domestique de la pluralité d'appareils domestiques formant un appareil satellite, et agencée pour acquérir une commande vocale d'un utilisateur,
- au moins une unité d'analyse, installée sur un deuxième appareil domestique de la pluralité d'appareils domestiques formant un appareil hôte, et agencée pour recevoir la commande vocale de la part de l'unité satellite, l'unité d'analyse étant agencée pour traiter et analyser la commande vocale reçue pour :
   - déduire une information de localisation de l'utilisateur en fonction de la commande vocale reçue et/ou de l'unité satellite ayant acquis la commande vocale, et
   - déduire une action à effectuer en fonction de la commande vocale reçue,
   - adapter et/ou limiter, et/ou ajuster, et/ou modifier, l'action à effectuer en fonction de la localisation de l'utilisateur,
   - envoyer une instruction de commande correspondant à l'action adaptée à un appareil domestique de la pluralité d'appareils domestiques formant un appareil de travail.

Selon la mise en œuvre ci-dessus, le système de commande comprend une unité d'analyse qui peut déduire une information de localisation de l'utilisateur, et qui peut adapter l'action que doit effectuer un des appareils domestiques en réponse à la commande vocale reçue de la part de l'utilisateur. En d'autres termes, le système de commande ne se contente pas d'exécuter la commande brute reçue, mais cette commande est traitée pour être adaptée à l'environnement de l'utilisateur de sorte à enrichir ou adapter le service proposé. Par exemple, s'il est déterminé que l'utilisateur donnant une commande vocale de passer l'aspirateur se trouve dans une pièce dont le sol comprend une moquette, alors l'unité d'analyse pourra envoyer une commande de nettoyage à un aspirateur robot, et adapter la commande pour que l'aspirateur robot se mette en configuration de nettoyage moquette, sans ordre ou commande spécifique supplémentaire de l'utilisateur.

Selon un mode de réalisation, l'unité satellite peut être ou comprendre une unité de numérisation de la voix de l'utilisateur, et/ou l'unité satellite peut être ou comprendre une unité d'enregistrement de la voix de l'utilisateur. L'unité satellite peut comprendre un ou plusieurs microphones communément désigné par le terme anglais « microphone array », un convertisseur analogique-numérique, une unité de compression de données, des filtres de traitement du signal...

Selon un mode de réalisation, l'unité d'analyse peut comprendre une unité de calcul, une unité de stockage de données, une unité de connexion à un serveur distant (pour par exemple effectuer le décodage de la voix et/ou de la commande via internet).

Selon un mode de réalisation, la pluralité d'appareils domestiques peut former un réseau de communication maillé. Un réseau maillé désigne une topologie de réseau où tous les hôtes sont connectés pair à pair sans hiérarchie centrale, formant ainsi une structure en forme de filet. Par conséquent, chaque nœud peut recevoir, envoyer et relayer les données. Un tel réseau se prête bien à une utilisation domestique où les appareils peuvent relayer des données vers l'unité d'analyse par exemple.

Selon un mode de réalisation, chaque appareil domestique de la pluralité d'appareils domestiques comprend au moins une unité de communication sans fil.

Selon un mode de réalisation, le système de commande peut comprendre au moins une unité de localisation, agencée pour déduire une information de position d'au moins un appareil domestique de la pluralité d'appareils domestiques par rapport aux autres appareils domestiques de la pluralité d'appareils domestiques, sur la base d'une analyse d'une intensité et/ou d'une puissance de signaux reçus, et/ou d'une information de configuration de localisation. La localisation peut se baser sur le calcul d'une atténuation du signal reçu, sur une triangulation de la voix de l'utilisateur effectuée par plusieurs appareils... Alternativement, la localisation d'au moins un appareil domestique peut être renseignée manuellement par l'utilisateur, par exemple lors d'une phase de configuration du réseau. Lors de cette configuration, qui peut être effectuée initialement lors de la mise en place du réseau, et/ou lors de l'ajout d'un appareil domestique, on pourra renseigner la localisation d'au moins un appareil dans le logement de l'utilisateur. On peut faire cette opération manuellement, ou bien faire une configuration automatique, en utilisant une fonction de reconnaissance d'un des appareils domestiques, par exemple une caméra d'un aspirateur robot qui se déplace de pièce en pièce, un appareil photo d'un téléphone intelligent, une unité de communication à courte portée. Ainsi les appareils domestiques peuvent être reconnus par un appareil lui-même localisé (par triangulation, par GPS, par reconnaissance photo des pièces...), et une information de configuration de localisation d'un appareil non localisé par lui-même (initialement présent ou nouvellement ajouté) peut être déduite et stockée dans une unité de localisation.

Selon un mode de réalisation, le système de commande peut comprendre au moins une unité de connexion, agencée pour établir une connexion avec un serveur distant, par exemple via un réseau internet.

Selon un mode de réalisation, le système de commande peut comprendre :
- une première unité d'analyse, installée sur le deuxième appareil domestique de la pluralité d'appareils domestiques formant un premier appareil hôte,
- une deuxième unité d'analyse, installée sur un troisième appareil domestique de la pluralité d'appareils domestiques formant un deuxième appareil hôte,
dans lequel :
la première unité d'analyse peut être agencée pour déduire une première action à effectuer en fonction de la commande vocale reçue et adapter la première action à effectuer en fonction de la localisation de l'utilisateur,
la deuxième unité d'analyse peut être agencée pour déduire une deuxième action à effectuer en fonction de la commande vocale reçue et adapter la deuxième action à effectuer en fonction de la localisation de l'utilisateur, la deuxième action étant différente de la première action. Selon cette mise en œuvre, on peut proposer plusieurs unités d'analyse qui sont chacune dédiée ou spécialisée dans un type de commande. Ainsi, le système de commande devient modulable et peut être enrichi ou spécialisé par l'utilisateur en fonction de ses besoins ou des appareils domestiques en sa possession.

Selon un mode de réalisation, chaque unité satellite et/ou l'unité d'analyse peut être agencée pour déterminer, en fonction de la commande vocale acquise :
- une direction d'arrivée de la commande vocale et/ou
- une distance entre l'utilisateur et l'unité satellite faisant l'acquisition de la commande vocale. La direction d'arrivée et/ou la distance peut être déterminée en comparant les signaux reçus par plusieurs appareils pour la même commande, et/ou par triangulation.

Selon un mode de réalisation, la dite au moins une unité d'analyse peut être agencée pour retraiter et réanalyser la commande vocale reçue en fonction de la localisation de l'utilisateur, avant de déduire l'action à effectuer. Un tel retraitement, contextualisé en fonction de la localisation, peut procurer une meilleure analyse ou décodage de la commande.

Selon un mode de réalisation, l'appareil domestique de la pluralité d'appareils domestiques formant l'appareil de travail peut être agencé pour recevoir et exécuter l'instruction de commande correspondant à l'action adaptée.

Selon un mode de réalisation, au moins un et de préférence chaque appareil satellite peut être dépourvu d'unité d'analyse. Une seule unité d'analyse peut suffire pour tous les appareils domestiques. Cela permet de faire l'économie des modules d'analyse de la voix et de limiter les coûts.

Selon un mode de réalisation, l'appareil hôte comprenant l'unité d'analyse peut être agencé pour acquérir une commande vocale d'un utilisateur.

Selon un mode de réalisation, le système de commande peut comprendre au moins une unité d'interface homme machine installée sur au moins un appareil domestique de la pluralité d'appareils domestiques et comprenant :
- un transducteur électroacoustique agencé pour produire des sons, et/ou
- un afficheur. L'ergonomie d'utilisation est améliorée.

Un deuxième aspect de l'invention se rapporte à un réseau d'appareils domestiques incluant par exemple des appareils électroménagers, comprenant :
- au moins un appareil satellite comprenant une unité satellite du système de commande selon le premier aspect de l'invention,
- au moins un appareil hôte comprenant une unité d'analyse du système de commande selon le premier aspect de l'invention,
- de préférence un appareil de travail agencé pour exécuter l'instruction de commande correspondant à l'action adaptée et envoyée par l'unité d'analyse.

Selon un mode de réalisation, l'appareil de travail peut être un appareil satellite ou un appareil hôte.

Selon un troisième aspect, l'invention se rapporte à un procédé de commande d'appareils domestiques incluant par exemple des appareils électroménagers, comprenant les étapes consistant à :
- acquérir une commande vocale d'un utilisateur avec une unité satellite du système de commande selon le premier aspect de l'invention,
- recevoir la commande vocale de la part de l'unité satellite par une unité d'analyse du système de commande selon le premier aspect de l'invention,
- déduire une information de localisation de l'utilisateur en fonction de la commande vocale reçue et/ou de l'unité satellite ayant acquis la commande vocale, et
- déduire une action à effectuer en fonction de la commande vocale reçue,
- adapter, et/ou limiter, et/ou ajuster, et/ou modifier, l'action à effectuer en fonction de la localisation de l'utilisateur,
- envoyer une instruction de commande correspondant à l'action adaptée à un appareil domestique de la pluralité d'appareils domestiques formant un appareil de travail.

Selon un mode de réalisation, le procédé de commande peut comprendre une étape mise en œuvre par l'appareil de travail et consistant à exécuter l'instruction de commande correspondant à l'action adaptée.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente de manière schématique une pluralité d'appareils domestiques situés dans une maison d'un utilisateur ;
[fig. 2] représente une partie d'un réseau maillé formé par les appareils domestiques de la figure 1 ;
[fig. 3] représente un utilisateur interagissant avec les appareils du réseau maillé de la figure 2
[fig. 4] représente un appareil satellite faisant partie du réseau maillé formé par les appareils domestiques de la figure 1 ;
[fig. 5] représente un appareil hôte faisant partie du réseau maillé formé par les appareils domestiques de la figure 1.

### Description détaillée de mode(s) de réalisation

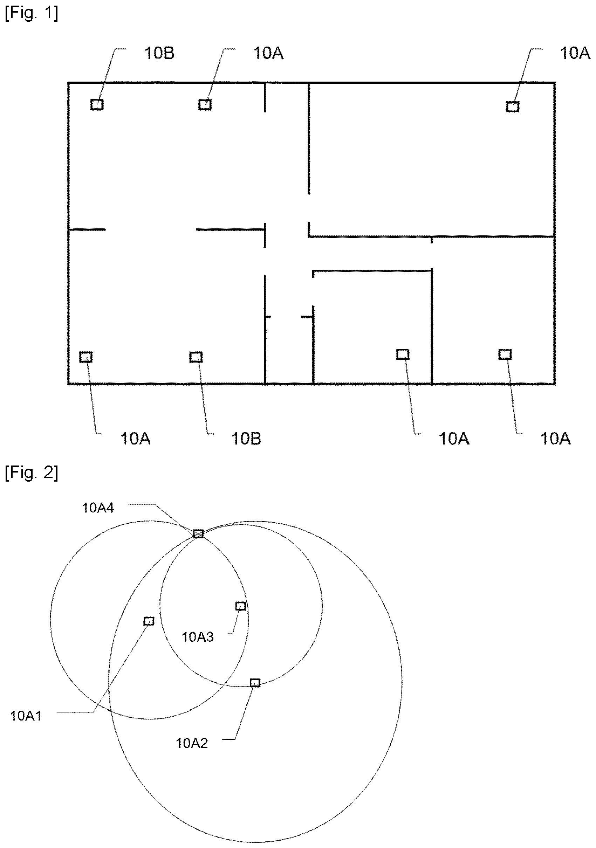

La figure 1 représente une pluralité d'appareils domestiques situés dans une maison d'un utilisateur. En particulier, les appareils domestiques peuvent être des appareils électroménagers comme un aspirateur, un robot aspirateur, un appareil de cuisson, un appareil de préparation de boissons chaudes (machine à café...), un appareil de soin du corps (un sèche cheveux, un épilateur, une brosse à dents électrique, un appareil de massage...), un appareil de préparation culinaire (un robot, un robot cuiseur, un grille pain...), un réfrigérateur... On peut aussi inclure dans les appareils domestiques les radios, les téléviseurs, les radio réveils, les enceintes connectées...

Comme le montre la figure 1, les appareils domestiques sont répartis dans les différentes pièces de la maison représentée. On peut avoir dans la cuisine en bas à gauche des appareils plutôt dédiés à la préparation de repas (réfrigérateur, machine à café, plaque de cuisson, robot cuiseur...). Dans le salon en haut à gauche, on peut prévoir la présence d'une enceinte connectée, d'un robot aspirateur, d'une télévision, d'une lampe connectée... Dans les chambres en haut et en bas à droite, on peut aussi avoir la présence d'une enceinte connectée, d'un robot aspirateur, d'une télévision, d'un radio réveil, d'une lampe connectée ... Dans la salle de bain en bas au milieu, on peut prévoir des appareils de soin du corps (sèche-cheveux, pèse-personne, brosse à dents électrique, miroir connecté, d'une lampe connectée...).

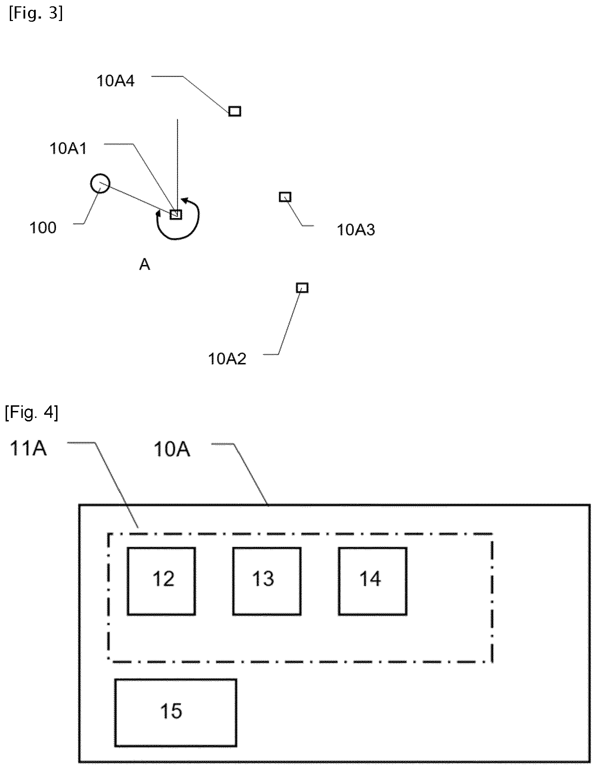

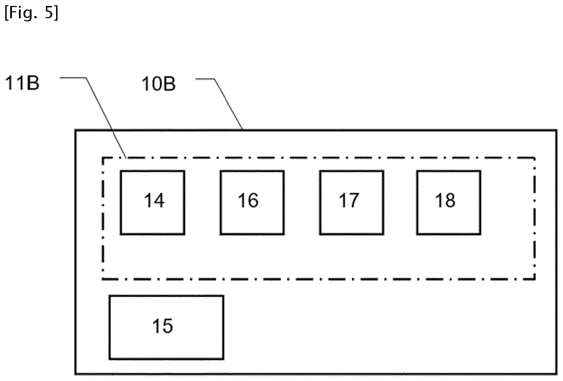

Tous ces appareils peuvent former un réseau domestique pour procurer un service enrichi à l'utilisateur qui peut être dans n'importe quelle pièce de son domicile. En particulier tous les appareils (ou au moins une partie) peuvent comprendre une unité satellite 11A (voir figure 4), pour acquérir une commande vocale et former ainsi un appareil satellite 10A. Au moins un appareil comprend quant à lui une unité d'analyse 11B (voir figure 5) pour former un appareil hôte 10B, l'unité d'analyse 11B procurant à l'appareil hôte la capacité de traiter et analyser la commande vocale de l'utilisateur, captée par un appareil satellite 10A.

On peut bien entendu prévoir que le ou les appareils hôte(s) 10B comprennent eux aussi une unité satellite 11A pour capter ou acquérir une commande vocale. Cependant, au moins quelques appareils satellites 10A ne comprennent pas d'unité d'analyse 11B. Ceci permet d'éviter de dupliquer « l'intelligence » de décodage et de traitement de la commande vocale sur tous les appareils domestiques.

Comme indiqué ci-dessus, les appareils domestiques forment un réseau, et peuvent communiquer entre eux. A cet effet, chaque appareil comprend une unité de communication 14 pour échanger des données. Cette unité de communication 14 est du type non filaire donc sans fil par ondes radios, comme par exemple par wifi ou Bluetooth ou tout autre protocole.

On peut aussi prévoir de former un réseau maillé, c'est-à-dire un réseau dont l'architecture permet à un appareil intermédiaire de relayer une transmission de données sans fil entre deux appareils trop distants par exemple.

Par exemple, et comme le montre la figure 4, un appareil satellite 10A peut comprendre une unité satellite 11A avec un microphone 12, un module de traitement audio 13 avec notamment un convertisseur analogique-numérique et un module de reconnaissance de mot clé, et une unité de communication 14. On peut aussi prévoir un haut-parleur 15 pour faire un retour vocal vers l'utilisateur.

Par exemple, et comme le montre la figure 5, un appareil hôte 10B peut comprendre une unité d'analyse 11B avec une unité de communication 14, un module de reconnaissance vocale automatique 16 pour reconnaître les mots de la commande vocale, un module de traitement du langage naturel 17 (par exemple un module de compréhension automatique) autrement désigné par l'acronyme anglais NLP pour « Natural Language Processing », et utilisé pour catégoriser les mots reconnus et en déduire l'action demandée par l'utilisateur, et enfin une unité de commande 18 pour traiter la commande vocale reconnue et envoyer des instructions de commande à un autre appareil si besoin. On peut prévoir que ces fonctions soient effectuées localement (au niveau de l'appareil hôte 10B lui-même), mais on peut prévoir de faire ces opération sur un serveur distant, (par internet par exemple).On peut noter que l'appareil hôte 10B peut en plus comprendre les fonctions et éléments d'un appareil satellite 10A pour lui aussi capter et acquérir une commande vocale, et un haut-parleur 15.

Ainsi, l'appareil satellite 10A peut capter la voix de l'utilisateur, et lors de la reconnaissance d'un mot clé qui indique qu'il s'agit d'une commande vocale, la voix de l'utilisateur est transmise à l'appareil hôte 10B qui traitera le flux vocal pour déterminer la commande à effectuer et envoyer une instruction de commande à un appareil de travail qui peut être l'un des appareils satellites 10A, des appareils hôtes 10B, ou ni l'un ni l'autre. On peut prévoir de faire un retour vocal à l'utilisateur par exemple via le haut-parleur 15 de l'appareil qui a capté la commande vocale.

On peut prévoir de localiser l'utilisateur, pour aussi prendre en compte sa position dans la maison. Comme le montre la figure 2 montrant un exemple avec quatre nœuds du réseau formés par des appareils satellites 10A1, 10A2, 10A3, 10A4, on peut mettre en œuvre une triangulation pour localiser les appareils les uns par rapport aux autres. On peut déterminer par exemple les distances relatives par l'indentification de force des signaux (rssi ou « Received Signal Strength Indicator » en langue anglaise). Dans la figure 2, le nœud formé par l'appareil 10A4 est localisé en utilisant les données d'indentification de force des signaux des appareils 10A1, 10A2, 10A3. Pour avoir la carte complète, il faut reproduire le processus en positionnant 10A1 par rapport à 10A2, 10A3 et 10A4, 10A2 par rapport à 10A1, 10A3 et 10A4 et enfin 10A4 par rapport à 10A1, 10A2 et 10A3. On peut aussi prévoir de rentrer manuellement la position des appareils domestiques dans un système central de surveillance pour affecter, par exemple lors d'une configuration du réseau, l'un ou l'autre des appareils à une pièce particulière de la maison. On peut aussi prévoir de définir des attributs à chaque pièce (définir qu'il s'agit de la cuisine, d'une chambre, du séjour...). On peut aussi prévoir une reconnaissance et configuration automatique avec un téléphone intelligent qui est déplacé de pièce en pièce avec l'appareil photo en fonctionnement pour détecter, reconnaître et localiser automatiquement les appareils dans le logement. Ainsi, chaque appareil domestique peut être localisé et une information de configuration de localisation est définie et peut être stockée dans chaque appareil, ou dans une mémoire centralisée. Une fois configurée une information de localisation, peut être utilisé pour adapter le fonctionnement d'un appareil lorsqu'un utilisateur est détecté dans la même pièce. Par exemple dans le cas d'un appareil de purification d'air celui-ci peut modifier son mode de fonctionnement pour basculer vers un mode fonctionnement silencieux.

En couplant cette localisation avec une gestion de la direction d'arrivée de la voix, on peut connaître un angle absolu (entre 0 et 360°) entre l'utilisateur et un appareil satellite particulier comme le montre la figure 3. De cette manière on peut en déduire un positionnement précis de l'utilisateur dans la carte de la maison. Sur la figure 3, le point 100 représente l'utilisateur, lorsqu'il parle à 10A1, on peut en déduire l'angle A via un algorithme de détermination de direction d'arrivée de la voix (programme DOA, pour « Direction of Arrival » en langue anglaise) présent sur l'appareil satellite 10A1. On peut estimer la distance avec l'utilisateur 100 par la mesure du niveau sonore de sa voix. La précision peut être améliorée dans le cas où deux appareils détecteraient l'utilisateur car le système aurait alors deux valeurs d'angles pour localiser ce dernier. De manière générale, plus le réseau maillé comportera de nœuds proches, plus la location sera précise.

Comme le montre la figure 3, on peut déterminer un angle A absolu d'environ 300° entre l'utilisateur 100 et l'appareil satellite 10A1, et la distance relative entre l'utilisateur 100 et l'appareil satellite 10A1. En combinaison avec la cartographie des appareils établie comme expliqué à la figure 2, l'utilisateur 100 peut être localisé dans la maison de la figure 1.

En conséquence, l'unité d'analyse 11B de l'appareil hôte 10B qui reçoit la commande vocale captée par un appareil satellite 10A peut aussi recevoir ou déduire l'information de localisation de l'utilisateur 100. Cette information de localisation est avantageusement prise en compte pour enrichir le service restitué à l'utilisateur. En particulier, une fois le flux vocal traité et la commande vocale identifiée par l'unité d'analyse 11B, celle-ci peut adapter l'action à effectuer en fonction de l'information de localisation de l'utilisateur. En d'autres termes, l'action à effectuer est contextualisée en fonction de la position de l'utilisateur dans la maison, avant d'envoyer une instruction de commande à un appareil de travail.

Selon un premier exemple, si la commande vocale identifiée est « passer l'aspirateur », alors l'appareil hôte 10B peut contextualiser la commande pour déterminer l'action à effectuer. En particulier, s'il est déterminé que l'utilisateur se trouve dans une pièce avec une moquette, alors l'unité d'analyse 11B peut envoyer à un aspirateur robot une instruction de commande de nettoyage de la pièce en cause, mais aussi une instruction de commande de mise en configuration de l'aspirateur robot pour sols moquette. Alternativement, En particulier, s'il est déterminé que l'utilisateur se trouve dans une pièce avec un sol lisse, alors l'unité d'analyse 11B peut envoyer à un aspirateur robot (l'appareil de travail) une instruction de commande de nettoyage de la pièce en cause, mais aussi une instruction de commande de mise en configuration pour sols lisses. La deuxième commande, ou commande adaptée est déduite de la position de l'utilisateur, et n'a fait l'objet d'aucune commande particulière de l'utilisateur, qui voit ainsi la commande enrichie sans action de sa part.

Selon un autre exemple, la commande vocale captée par un appareil satellite 10A et relayée à l'appareil hôte peut être « allumer la lumière ». L'unité d'analyse 11B peut contextualiser l'action à effectuer en fonction de localisation de l'utilisateur. Si ce dernier se trouve dans la cuisine, alors la commande peut être adaptée pour donner à une lampe connectée (l'appareil de travail) une instruction de mise en fonctionnement et d'émission d'une lumière plutôt blanche et de forte puissance ou forte intensité lumineuse. Par contre, s'il est déterminé que l'utilisateur se trouve dans une chambre, alors la commande consistant à allumer la lumière peut être contextualisée pour envoyer à une lampe connectée une instruction d'émettre une lumière douce (colorée en rouge ou en bleue) et de puissance ou intensité lumineuse moyenne ou faible.

On comprend que l'unité d'analyse 11B prend en compte l'information de localisation pour adapter les instructions de commande effectives en fonction de la position de l'utilisateur déterminée par le réseau d'appareils domestiques, sans demander de commande ou d'action supplémentaire à l'utilisateur. Le service est enrichi sans intervention de l'utilisateur.

### Application industrielle

Un réseau d'appareils domestiques selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention. En particulier, on peut noter que le réseau peut comprendre plusieurs appareils hôtes, des types de protocoles de communications différents (mais non filaire). On peut prévoir une interface homme machine, ou un appareil électronique de pilotage et/ou de configuration du réseau tel qu'un téléphone intelligent.

## Revendications

1. Système de commande d'une pluralité d'appareils domestiques, incluant par exemple des appareils électroménagers, comprenant :
- au moins une unité satellite (11A), installée sur un premier appareil domestique de la pluralité d'appareils domestiques formant un appareil satellite (10A), et agencée pour acquérir une commande vocale d'un utilisateur (100),
- au moins une unité d'analyse (11B), installée sur un deuxième appareil domestique de la pluralité d'appareils domestiques formant un appareil hôte (10B), et agencée pour recevoir la commande vocale de la part de l'unité satellite (11A), l'unité d'analyse (11B) étant agencée pour traiter et analyser la commande vocale reçue pour :
- déduire une information de localisation de l'utilisateur (100) en fonction de la commande vocale reçue et/ou de l'unité satellite (11A) ayant acquis la commande vocale, et
- déduire une action à effectuer en fonction de la commande vocale reçue,
- adapter l'action à effectuer en fonction de la localisation de l'utilisateur (100),
- envoyer une instruction de commande correspondant à l'action adaptée à un appareil domestique de la pluralité d'appareils domestiques formant un appareil de travail.

2. Système de commande selon la revendication 1, dans lequel la pluralité d'appareils domestiques forme un réseau de communication maillé.

3. Système de commande selon la revendication 1 ou 2, dans lequel chaque appareil domestique de la pluralité d'appareils domestiques comprend au moins une unité de communication sans fil.

4. Système de commande selon l'une des revendications 1 à 3, comprenant au moins une unité de localisation, agencée pour déduire une information de position d'au moins un appareil domestique de la pluralité d'appareils domestiques par rapport aux autres appareils domestiques de la pluralité d'appareils domestiques, sur la base d'une analyse d'une intensité et/ou d'une puissance de signaux reçus, et/ou d'une information de configuration de localisation dudit au moins un appareil domestique.

5. Système de commande selon l'une des revendications 1 à 4, comprenant au moins une unité de connexion, agencée pour établir une connexion avec un serveur distant, par exemple via un réseau internet.

6. Système de commande selon l'une des revendications 1 à 5, comprenant :
- une première unité d'analyse (11B), installée sur le deuxième appareil domestique de la pluralité d'appareils domestiques formant un premier appareil hôte (10B),
- une deuxième unité d'analyse (11B), installée sur un troisième appareil domestique de la pluralité d'appareils domestiques formant un deuxième appareil hôte (10B),
dans lequel :
la première unité d'analyse (11B) est agencée pour déduire une première action à effectuer en fonction de la commande vocale reçue et adapter la première action à effectuer en fonction de la localisation de l'utilisateur (100),
la deuxième unité d'analyse (11B) est agencée pour déduire une deuxième action à effectuer en fonction de la commande vocale reçue et adapter la deuxième action à effectuer en fonction de la localisation de l'utilisateur (100), la deuxième action étant différente de la première action.

7. Système de commande selon l'une des revendications 1 à 6, dans lequel chaque unité satellite (11A) et/ou l'unité d'analyse (11B) est agencée pour déterminer, en fonction de la commande vocale acquise :
- une direction d'arrivée de la commande vocale et/ou
- une distance entre l'utilisateur (100) et l'unité satellite (11A) faisant l'acquisition de la commande vocale.

8. Système de commande selon l'une des revendications 1 à 7, dans lequel la dite au moins une unité d'analyse (11B) est agencée pour retraiter et réanalyser la commande vocale reçue en fonction de la localisation de l'utilisateur (100), avant de déduire l'action à effectuer.

9. Système de commande selon l'une des revendications 1 à 8, dans lequel l'appareil domestique de la pluralité d'appareils domestiques formant l'appareil de travail est agencé pour recevoir et exécuter l'instruction de commande correspondant à l'action adaptée.

10. Système de commande selon l'une des revendications 1 à 9, dans lequel au moins un et de préférence chaque appareil satellite (10A) est dépourvu d'unité d'analyse (11B).

11. Système de commande selon l'une des revendications 1 à 10, dans lequel l'appareil hôte (10B) comprenant l'unité d'analyse (11B) est agencé pour acquérir une commande vocale d'un utilisateur (100).

12. Système de commande selon l'une des revendications 1 à 11, comprenant au moins une unité d'interface homme machine installée sur au moins un appareil domestique de la pluralité d'appareils domestiques et comprenant :
- un transducteur électroacoustique agencé pour produire des sons, et/ou
- un afficheur.

13. Réseau d'appareils domestiques incluant par exemple des appareils électroménagers, comprenant :
- au moins un appareil satellite (10A) comprenant une unité satellite (11A) du système de commande selon l'une des revendications 1 à 12,
- au moins un appareil hôte (10B) comprenant une unité d'analyse (11B) du système de commande selon l'une des revendications 1 à 12,
- de préférence un appareil de travail agencé pour exécuter l'instruction de commande correspondant à l'action adaptée et envoyée par l'unité d'analyse (11B).

14. Procédé de commande d'appareils domestiques incluant par exemple des appareils électroménagers, comprenant les étapes consistant à :
- acquérir une commande vocale d'un utilisateur (100) avec une unité satellite (11A) du système de commande selon l'une des revendications 1 à 12,
- recevoir la commande vocale de la part de l'unité satellite (11A) par une unité d'analyse (11B) du système de commande selon l'une des revendications 1 à 12,
- déduire une information de localisation de l'utilisateur (100) en fonction de la commande vocale reçue et/ou de l'unité satellite (11A) ayant acquis la commande vocale, et
- déduire une action à effectuer en fonction de la commande vocale reçue,
- adapter l'action à effectuer en fonction de la localisation de l'utilisateur (100),
- envoyer une instruction de commande correspondant à l'action adaptée à un appareil domestique de la pluralité d'appareils domestiques formant un appareil de travail.

15. Procédé de commande selon la revendication 14, comprenant une étape mise en œuvre par l'appareil de travail et consistant à exécuter l'instruction de commande correspondant à l'action adaptée.

## Patentansprüche

1. System zur Steuerung einer Vielzahl von Haushaltsgeräten, die zum Beispiel Haushaltsgeräte einschließen, mit :
- mindestens eine Satelliteneinheit (11A), die auf einem ersten Haushaltsgerät der Vielzahl von Haushaltsgeräten installiert ist, die ein Satellitengerät (10A) bilden, und die so beschaffen ist, dass sie einen Sprachbefehl von einem Benutzer (100) erfasst,
- mindestens eine Analyseeinheit (11B), die auf einem zweiten Haushaltsgerät der Vielzahl von Haushaltsgeräten, die ein Host-Gerät (10B) bilden, installiert und so angeordnet ist, dass sie den Sprachbefehl von der Satelliteneinheit (11A) empfängt,
wobei die Analyseeinheit (11B) dazu eingerichtet ist, den empfangenen Sprachbefehl zu verarbeiten und zu analysieren, um :
- eine Information über den Standort des Benutzers (100) in Abhängigkeit von dem empfangenen Sprachbefehl und/oder der Satelliteneinheit (11A), die den Sprachbefehl erfasst hat, abzuleiten, und
- eine auszuführende Aktion auf der Grundlage des empfangenen Sprachbefehls abzuleiten,
- die auszuführende Aktion in Abhängigkeit vom Standort des Benutzers (100) anpassen,
- Senden einer Steueranweisung, die der angepassten Aktion entspricht, an ein Haushaltsgerät aus der Vielzahl von Haushaltsgeräten, die ein Arbeitsgerät bilden.

2. Steuersystem nach Anspruch 1, wobei die Vielzahl von Haushaltsgeräten ein vermaschtes Kommunikationsnetz bildet.

3. Steuersystem nach Anspruch 1 oder 2, wobei jedes Haushaltsgerät aus der Vielzahl von Haushaltsgeräten mindestens eine drahtlose Kommunikationseinheit umfasst.

4. Steuersystem nach einem der Ansprüche 1 bis 3, mit mindestens einer Lokalisierungseinheit, die dazu eingerichtet ist, Positionsinformationen von mindestens einem Haushaltsgerät aus der Vielzahl von Haushaltsgeräten in Bezug auf andere Haushaltsgeräte aus der Vielzahl von Haushaltsgeräten abzuleiten, basierend auf einer Analyse einer Intensität und/oder Leistung von empfangenen Signalen und/oder auf Konfigurationsinformationen über die Lokalisierung des mindestens einen Haushaltsgeräts.

5. Steuersystem nach einem der Ansprüche 1 bis 4, mit mindestens einer Verbindungseinheit, die dazu eingerichtet ist, eine Verbindung zu einem entfernten Server herzustellen, z. B. über ein Internet-Netzwerk.

6. Steuersystem nach einem der Ansprüche 1 bis 5, umfassend :
- eine erste Analyseeinheit (11B), die auf dem zweiten Haushaltsgerät der Vielzahl von Haushaltsgeräten installiert ist, die ein erstes Host-Gerät (10B) bilden,
- eine zweite Analyseeinheit (11B), die an einem dritten Haushaltsgerät der Vielzahl von Haushaltsgeräten installiert ist, die ein zweites Host-Gerät (10B) bilden,
wobei :
die erste Analyseeinheit (11B) so eingerichtet ist, dass sie eine erste auszuführende Aktion auf der Grundlage des empfangenen Sprachbefehls ableitet und die erste auszuführende Aktion auf der Grundlage des Standorts des Benutzers (100) anpasst,
die zweite Analyseeinheit (11B) ist so beschaffen, dass sie eine zweite auszuführende Aktion auf der Grundlage des empfangenen Sprachbefehls ableitet und die zweite auszuführende Aktion auf der Grundlage des Standorts des Benutzers (100) anpasst, wobei sich die zweite Aktion von der ersten Aktion unterscheidet.

7. Steuersystem nach einem der Ansprüche 1 bis 6, wobei jede Satelliteneinheit (11A) und/oder die Analyseeinheit (11B) dazu eingerichtet ist, in Abhängigkeit von dem erfassten Sprachbefehl zu bestimmen :
- eine Ankunftsrichtung des Sprachbefehls und/oder
- eine Entfernung zwischen dem Benutzer (100) und der Satelliteneinheit (11A), die den Sprachbefehl erfasst.

8. Steuersystem nach einem der Ansprüche 1 bis 7, wobei die besagte mindestens eine Analyseeinheit (11B) dazu eingerichtet ist, den empfangenen Sprachbefehl in Abhängigkeit vom Standort des Benutzers (100) erneut zu verarbeiten und zu analysieren, bevor sie die auszuführende Aktion ableitet.

9. Steuersystem nach einem der Ansprüche 1 bis 8, wobei das Haushaltsgerät aus der Vielzahl von Haushaltsgeräten, die das Arbeitsgerät bilden, so eingerichtet ist, dass es den Steuerbefehl, der der angepassten Aktion entspricht, empfängt und ausführt.

10. Steuersystem nach einem der Ansprüche 1 bis 9, wobei mindestens ein und vorzugsweise jedes Satellitengerät (10A) keine Analyseeinheit (11B) hat.

11. Steuersystem nach einem der Ansprüche 1 bis 10, wobei das Hostgerät (10B) mit der Analyseeinheit (11B) so eingerichtet ist, dass es einen Sprachbefehl von einem Benutzer (100) erfasst.

12. Steuersystem nach einem der Ansprüche 1 bis 11, umfassend mindestens eine Mensch-Maschine-Schnittstelleneinheit, die an mindestens einem Haushaltsgerät aus der Vielzahl von Haushaltsgeräten installiert ist und umfasst :
- einen elektroakustischen Wandler, der zur Erzeugung von Tönen angeordnet ist, und/oder
- ein Display.

13. Netzwerk von Haushaltsgeräten, das zum Beispiel Haushaltsgeräte einschließt, mit :
- mindestens ein Satellitengerät (10A), das eine Satelliteneinheit (11A) des Steuersystems nach einem der Ansprüche 1 bis 12 umfasst,
- mindestens ein Host-Gerät (10B), das eine Analyseeinheit (11B) des Steuersystems nach einem der Ansprüche 1 bis 12 umfasst,
- vorzugsweise ein Arbeitsgerät, das so eingerichtet ist, dass es den Steuerbefehl ausführt, der der angepassten Aktion entspricht und von der Analyseeinheit (11B) gesendet wurde.

14. Verfahren zur Steuerung von Haushaltsgeräten, die z. B. Haushaltsgeräte einschließen, mit den folgenden Schritten: :
- Erfassen eines Sprachbefehls von einem Benutzer (100) mit einer Satelliteneinheit (11A) des Steuersystems nach einem der Ansprüche 1 bis 12 umfasst,
- Empfangen des Sprachbefehls von der Satelliteneinheit (11A) durch eine Analyseeinheit (11B) des Steuersystems nach einem der Ansprüche 1 bis 12,
- Ableiten einer Information über den Standort des Benutzers (100) in Abhängigkeit von dem empfangenen Sprachbefehl und/oder der Satelliteneinheit (11A), die den Sprachbefehl erfasst hat, und
- Ableiten einer auszuführenden Aktion auf der Grundlage des empfangenen Sprachbefehls,
- die auszuführende Aktion in Abhängigkeit vom Standort des Benutzers (100) anpassen,
- Senden einer Steueranweisung, die der angepassten Aktion entspricht, an ein Haushaltsgerät aus der Vielzahl von Haushaltsgeräten, die ein Arbeitsgerät bilden.

15. Steuerungsverfahren nach Anspruch 14, das einen Schritt umfasst, der von der Arbeitsvorrichtung implementiert wird und darin besteht, den Steuerbefehl auszuführen, der der angepassten Aktion entspricht.

## Claims

1. System for controlling a plurality of household appliances, including for example domestic appliances, comprising :
- at least one satellite unit (11A), installed on a first domestic appliance of the plurality of domestic appliances forming a satellite appliance (10A), and arranged to acquire a voice command from a user (100),
- at least one analysis unit (11B), installed on a second domestic appliance of the plurality of domestic appliances forming a host appliance (10B), and arranged to receive the voice command from the satellite unit (11A),
the analysis unit (11B) being arranged to process and analyse the voice command received in order to :
- deduce information about the location of the user (100) as a function of the voice command received and/or the satellite unit (11A) that acquired the voice command, and
- deducing an action to be performed as a function of the voice command received,
- adapting the action to be performed as a function of the location of the user (100),
- sending a control instruction corresponding to the adapted action to one of the plurality of domestic appliances forming a working appliance.

2. The control system of claim 1, wherein the plurality of domestic appliances form a mesh communication network.

3. A control system as claimed in claim 1 or 2, wherein each of the plurality of domestic appliances comprises at least one wireless communication unit.

4. A control system according to one of Claims 1 to 3, comprising at least one location unit, arranged to deduce position information of at least one domestic appliance of the plurality of domestic appliances relative to the other domestic appliances of the plurality of domestic appliances, on the basis of an analysis of an intensity and/or a power of signals received, and/or of location configuration information of said at least one domestic appliance.

5. A control system according to one of Claims 1 to 4, comprising at least one connection unit, arranged to establish a connection with a remote server, for example via an internet network.

6. A control system according to one of Claims 1 to 5,
comprising:
- a first analysis unit (11B), installed on the second domestic appliance of the plurality of domestic appliances forming a first host appliance (10B),
- a second analysis unit (11B), installed on a third domestic appliance of the plurality of domestic appliances forming a second host appliance (10B),
in which :
the first analysis unit (11B) is arranged to deduce a first action to be performed as a function of the voice command received and to adapt the first action to be performed as a function of the location of the user (100),
the second analysis unit (11B) is arranged to deduce a second action to be performed as a function of the voice command received and to adapt the second action to be performed as a function of the location of the user (100), the second action being different from the first action.

7. A control system according to one of Claims 1 to 6, in which each satellite unit (11A) and/or the analysis unit (11B) is arranged to determine, as a function of the acquired voice command :
- a direction of arrival of the voice command and/or
- a distance between the user (100) and the satellite unit (11A) acquiring the voice command.

8. A control system according to one of Claims 1 to 7, in which said at least one analysis unit (11B) is arranged to reprocess and reanalyse the voice command received as a function of the location of the user (100), before deducing the action to be performed.

9. A control system according to any of Claims 1 to 8, wherein the home appliance of the plurality of home appliances forming the work appliance is arranged to receive and execute the control instruction corresponding to the adapted action.

10. A control system according to one of Claims 1 to 9, wherein at least one and preferably each satellite device (10A) is devoid of an analysis unit (11B).

11. A control system according to any of Claims 1 to 10, wherein the host apparatus (10B) comprising the analysis unit (11B) is arranged to acquire a voice command from a user (100).

12. A control system according to any of Claims 1 to 11, comprising at least one man-machine interface unit installed on at least one domestic appliance of the plurality of domestic appliances and comprising :
- an electroacoustic transducer arranged to produce sounds, and/or
- a display.

13. A network of domestic appliances including, for example, household appliances, comprising :
- at least one satellite appliance (10A) comprising a satellite unit (11A) of the control system according to one of Claims 1 to 12,
- at least one host appliance (10B) comprising an analysis unit (11B) of the control system according to one of Claims 1 to 12,
- preferably a work device arranged to execute the control instruction corresponding to the adapted action and sent by the analysis unit (11B).

14. A method of controlling domestic appliances including, for example, domestic electrical appliances, comprising the steps of :
- acquiring a voice command from a user (100) with a satellite unit (11A) of the control system according to one of Claims 1 to 12,
- receiving the voice command from the satellite unit (11A) by an analysis unit (11B) of the control system according to one of Claims 1 to 12,
- deducing information about the location of the user (100) as a function of the voice command received and/or the satellite unit (11A) that acquired the voice command, and
- deducing an action to be performed as a function of the voice command received,
- adapting the action to be performed as a function of the location of the user (100),
- sending a control instruction corresponding to the adapted action to one of the plurality of domestic appliances forming a working appliance.

15. A control method according to claim 14, comprising a step implemented by the working apparatus and consisting of executing the control instruction corresponding to the adapted action.
